# EUROPÄISCHE PATENTSCHRIFT

(11) **EP 0 633 180 B1**
(45) Veröffentlichungstag und Bekanntmachung des Hinweises auf die Patenterteilung: **06.11.1996**
(21) Anmeldenummer: 94109611.7
(22) Anmeldetag: 22.06.1994
(51) Int. Cl.: B62D 1/19

(54) **Sicherheitslenkung für Kraftfahrzeuge**
Safety steering for motor vehicles
Direction de sécurité pour véhicules à moteur

(30) Priorität: 07.07.1993 DE 4322636
(43) Veröffentlichungstag der Anmeldung: 11.01.1995
(73) Patentinhaber: ETABLISSEMENT SUPERVIS, FL-9490 Vaduz (LI)
(72) Erfinder: Müntener, Herbert, FL-9491 Ruggell (LI); Walser, Michael, FL-9494 Schaan (LI)
(74) Vertreter: Hefel, Herbert, Dipl.-Ing.

(56) Entgegenhaltungen:
- EP-A- 0 479 455
- EP-A- 0 516 966
- DE-A- 1 911 054
- DE-A- 3 616 246
- DE-A- 3 720 320
- DE-B- 2 225 128
- DE-U- 7 303 347
- FR-A- 2 392 861
- US-A- 3 769 851

## Beschreibung

Die Erfindung bezieht sich auf eine Sicherheitslenkung für Kraftfahrzeuge, insbesondere Personenkraftwagen mit den Merkmalen des Oberbegriffes des Patentanspruches 1.

Damit werden die vom Gesetzgeber in den verschiedenen Ländern geforderten Sicherheitsbestimmungen hinsichtlich der Lenkanlage von Kraftfahrzeugen erfüllt, wobei in die Lenkwelle sogenannte Deformationselemente eingebaut werden, die bei einem Aufprall des Fahrzeuglenkers auf das Lenkrad ab einer bestimmten Aufprallenergie nachgeben, dabei Energie vernichten und somit den Aufprall für den Fahrzeuglenker erträglicher gestalten.

Bei einer vorbekannten Konstruktion dieser Art nach der DE-OS 22 27 327 sind im Kollisionsfall gegeneinander verschiebbare Teile der Lenksäule außer über Führungsbolzen und Abscherbolzen über eine Langloch-Schraubenbolzenverbindung miteinander vereinigt. Ein U-förmiger Blechteil mit dem Langloch liegt auf einer kopfseitigen Schulter eines Befestigungsbolzens auf. Über eine Mutter des Schraubenbolzens wird unter Zwischenschaltung einer Verdrehsicherung eine Unterlagscheibe gegen die Oberseite des erwähnten U-formigen Blechteiles gedrückt. Es ist unschwer zu erkennen, daß das Ausmaß der Auslösekraft davon abhängig ist, wie stark bei der Montage die Mutter auf dem Schraubbolzen angezogen wurde. Da diese für den Kollisionsfall vorgesehene Auslösevorrichtung eine äußerst kritische Baukomponente im Bereich der Lenkung darstellt, ist die hier vorgesehene Lösung unzureichend, da die Auslösekraft im wesentlichen davon abhängig ist, wie stark die Mutter bei der Montage festgezogen wurde. Die Auslösekraft wird also mehr oder weniger willkürlich sein - ein Umstand, der für ein Sicherheitselement nicht tragbar ist.

Aus der DE-AS 22 25 128 ist ferner eine obere Abstützung für eine steil gestellte Sicherheitslenksäule für Kraftfahrzeuge mit Frontlenkerbauart bekannt. Bei Stoßkrafteinwirkung unter Energieabsorbung ist diese Sicherheitslenksäule in Frontrichtung verschwenkbar, wobei die Abstützung im Winkel zur Mittelachse der Lenksäule angeordnet am Armaturenbrett gehalten ist. Diese obere Abstutzung ist aufgebaut aus einer zu ihrer Längsachse achsensymmetrischen Stützplatte, deren Breite am vorderen, armaturenbrettseitigen Abschnitt größer ist als am hinteren Abschnitt und die ein Paar nach unten gerichteter, symmetrisch angeordneter paralleler Aussteifungsflanken aufweist. Diese Aussteifungsflanken sind jeweils mit einem Langlochschlitz versehen, der an dem dem vorderen Abschnitt der Stutzplatte nahen Ende in eine vordere Erweiterung übergeht. Ferner ist ein Verformungsbolzen vorgesehen, der quer zur Längsachse der Stützplatte in einem Lagerbock befestigt ist und der mit seinen Endabschnitten in den Erweiterungen des Langlochschlitzes angeordnet ist. Der Lagerbock ist am Armaturenbrett befestigt. Die Stützplatte mit den Seitenkanten ihres vorderen Abschnittes ist beiderseits in Führungen abscherbar gehalten und mit ihrem hinteren Abschnitt lösbar an der Lenksäule befestigt. Der Verformungsbolzen ist mit seinen beiden Enden entweder direkt in den erwähnten Langlochschlitzen gelagert, oder aber es kann jeder Langlochschlitz mit einer Kunststoffumkleidung ausgestattet sein. Bei der Kunststoffumkleidung handelt es sich um eine Auskleidung der Langlochausnehmungen.

Schlußendlich ist in diesem Zusammenhang noch auf die Sicherheitslenkung hinzuweisen, die nach dem DE-GM 73 03 347 bekanntgeworden ist. Bei dieser vorbekannten Sicherheitslenkung ist zwischen der Befestigung der Lenksäule am Fahrzeugaufbau und der Lenksäule ein mit der Lenksäule verbundenes Deformationselement angeordnet. Dieses Deformationselement besteht aus einem gewellten Zugband aus Flachstahl, das etwa senkrecht zur Längsrichtung der Lenkwelle bzw. der Lenksäule angeordnet ist. Es erstreckt sich zwischen zwei beiderseits der Lenksäule befindlichen Befestigungsstellen für die Lenksäule am Fahrzeugaufbau, wogegen die Befestigung des Deformationselementes selbst an der Lenksäule etwa mittig angeordnet ist. Das Deformationselement ist an seinen fabrzeugaufbauseitigen Befestigungsstellen jeweils zwischen einem Flansch der Lenksäule und dem Fahrzeugaufbau verschraubt, wobei zwischen dem Fahrzeugaufbau und der Unterseite des Schraubenkopfes Distanzhülsen angeordnet sind.

Von diesem Stand der Technik geht die Erfindung aus und sie zielt darauf ab, die erfindungsgemäße Konstruktion so zu gestalten ist, daß sie ohne besonderen Aufwand unterschiedlichen Anforderungen anpaßbar ist, nämlich Anforderungen an die Auslösekriterien der Sicherheitseinrichtung im Kollisionsfall. Bei einem Aufprall des Fahrzeuglenkers auf das Lenkrad dürfen die auf den Brustkorb des Fahrzeuglenkers einwirkenden Kräfte einen vom Gesetzgeber geforderten Wert nicht überschreiten und die nach dem Ansprechen der Sicherheitseinrichtung noch wirksamen Kräfte müssen einen solchen Verlauf zeigen, daß Verletzungen möglichst ausgeschaltet werden. Darüberhinaus sollen diese durch die Erfindung erzielbaren Verhältnisse während der Lebensdauer des Fahrzeuges unverändert aufrecht erhalten werden, ohne daß die Einrichtung einer Wartung bedarf. Zur Lösung dieser komplexen Aufgabe werden erfindungsgemäß jene Maßnahmen vorgeschlagen, die Gegenstand und Inhalt des kennzeichnenden Teiles des Patentanspruches 1 sind.

Um die Erfindung zu veranschaulichen, werden Ausführungsbeispiele anhand der Zeichnung näher erläutert, ohne die Erfindung dadurch auf diese gezeigten Ausführungsformen einzuschränken. Es zeigen:
Fig. 1 die wesentlichen Teile der Sicherheitslenkung in Draufsicht;
Fig. 2 in Seitensicht;
Fig. 3 die Lenksäule in Seitensicht und
Fig. 4 in Ansicht;
Fig. 5 ein Detail in einem gegenüber den anderen Figuren vergrößerten Maßstab;
Fig. 6 das Detail einer Verschraubung in einem gegenüber den anderen Figuren vergrößerten Maßstab.
Fig. 7, 8, 9 ein Deformationselement in Draufsicht, Seitensicht und Ansicht;
Fig. 10 die Lage des Deformationselementes im Langloch;
Fig. 11 das Detail einer Vernietung in einer Darstellung wie in Fig. 6.

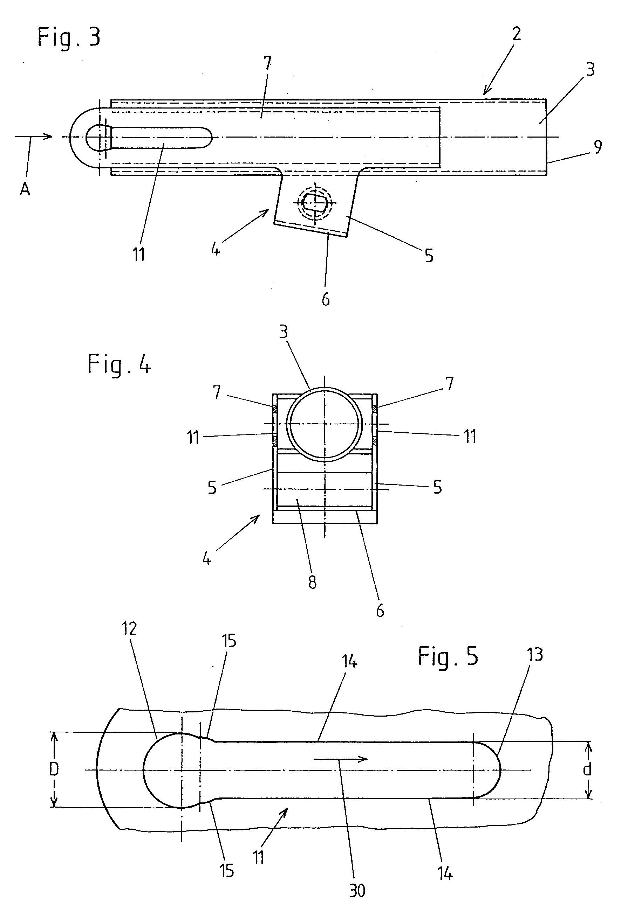

Die hier wesentlichen Teile der Sicherheitslenkung sind die in ihrer konstruktiven Ausgestaltung nicht weiter veranschaulichte Lenkwelle 1, die in der am Fahrzeugaufbau zu befestigenden Lenksäule 2 drehbar gelagert ist. Diese Lenksäule 2 ist in Fig. 3 in Seitensicht und in Fig. 4 in Ansicht (Blickrichtung Pfeil A in Fig. 3) gezeigt. Sie weist ein Rohr 3 auf für die Aufnahme der Lager und der Lenkwelle 1 und dieses Rohr 3 ist von einem U-förmigen Bügel 4 aufgenommen. Dieser U-förmige Bügel 4 besitzt einen zwei parallele Seitenwangen 5 verbindenden Steg 6. Die oberen Abschnitte der beiden Seitenwangen 5 gehen in langgestreckte, U-förmige Schienen 7 über, deren offene Seiten einander zugewandt sind, wobei das Rohr 3 zwischen diesen Schienen 7 liegt und von ihnen gehalten ist. Gegenüber der Ebene des Steges 6 ist die Achse dieser U-förmigen Schienen 7 und damit auch die Achse des Rohres 3 etwas geneigt. Zwischen dem Steg 6 und dem Rohr 3 ist noch eine Durchsteckhülse 8 für die Aufnahme eines Spannbolzens 10 angeordnet, wobei die beiden Stirnseiten dieser Durchsteckhülse 8 mit den Wangen 5 des Bügels 4 verbunden sind. Die Stirnseite 9 des Rohres 3 ist jene, die dem hier nicht dargestellten Lenkrad zugewandt ist. In jenem Abschnitt der Schienen 7, der der Stirnseite 9 des Rohres 3 abgewandt ist, ist parallel zur Achse des Rohres 3 liegend eine Langlochausnehmung 11 vorgesehen. Diese Langlochausnehmung 11, die paarweise zu beiden Seiten des Rohres 3 vorgesehen ist, ist in Fig. 5 im Detail und vergrößert dargestellt.

Diese Langlochausnehmung 11, die in den Schienen 7 zu beiden Seiten des Rohres 3 vorgesehen ist, besitzt endseitig kreisbogenförmige Begrenzungskanten 12 und 13, zwischen welchen gerade Begrenzungskanten 14 verlaufen. Der Durchmesser D der lenkradabgewandten, bogenförmigen Begrenzungskante 12 ist dabei größer als der Durchmesser d der lenkradzugewandten Begrenzungskante 13. Die Begrenzungskante 12 geht in der gezeigten Ausführungsform über einen stufenartigen Absatz 15 in die geraden Begrenzungskanten 14 über, die hier über ihre Längen parallel zueinander verlaufen. Es liegt im Rahmen der Erfindung, diese gerade verlaufenden Begrenzungskanten 14 gegen das lenkradseitige Ende der Langlochausnehmung 11 etwas konvergierend verlaufen zu lassen oder den Verlauf des Absatzes 15 anders zu gestalten, beispielsweise durch gerade verlaufende Konturen, wobei der Übergangsbereich unterschiedlich hoch bemessen sein kann, je nach den Anforderungen, die an das Crashverhalten gestellt werden.

Zur Befestigung der Lenksäule 2 am Fahrzeugaufbau sind einmal Winkellaschen 16 vorgesehen, deren im wesentlichen seitlich auskragende Schenkel 17 Durchstecköffnungen 18 für die Aufnahme von Befestigungsschrauben besitzen. Die vertikalen Schenkel 19 dieser Winkellaschen 16 sind über Befestigungsschrauben 20 mit den Schienen 7 der Lenksäule 2 verbunden, wobei diese Befestigungsschrauben 20 Distanzhülsen 21 durchsetzen und die Schrauben 20 zusammen mit den Distanzhülsen 21 von je einer Buchse 22 aus leicht verformbarem Material, vorzugsweise aus Kunststoff aufgenommen sind. Der Innendurchmesser dieser Buchse 22 entspricht dem Außendurchmesser der Distanzhülse 21 und der Außendurchmesser der Buchse 22 entspricht dem Durchmesser D der kreisbogenförmigen Begrenzungskante 12 der Langlochausnehmung 11. Die aus leicht verformbarem Material, vorzugsweise aus Kunststoff gefertigte Buchse 22 besitzt einen seitlich auskragenden Bund 23, der zwischen dem die Langlochausnehmung 11 aufweisenden Teil 7 der Lenksäule 2 und dem Schenkel 19 der Winkellasche 16 liegt. Die Schenkel 19 der Winkellasche 16 können über die Bohrung zur Aufnahme des Befestigungsmittels hinaus verlängert sein und diese so verlängerten Schenkel 19 können dann durch einen Quersteg miteinander verbunden werden, so daß die beiden Winkellaschen 16 einen einstückigen, in Ansicht U-förmigen Bauteil bilden, von dessen beiden Wangen die Schenkel 17 seitlich auskragen.

Die Distanzhülse 21 begrenzt die Wirkung der Spannkraft der angezogenen Befestigungsschraube 20 auf die Verbindungsstelle, so daß die Winkellasche 16 beziehungsweise deren Schenkel 19 um die Achse der Befestigungsschraube 20 verschwenkbar gehalten werden kann.

Ferner ist ein weiterer U-förmiger Befestigungsbügel 24 vorgesehen, dessen parallele Wangen 25 seitlich auskragende Flansche 26 tragen mit Aufnahmeöffnungen 27, die gegen das Lenkrad hin als offene Schlitze ausgebildet sind. In den Wangen 25 des U-förmigen Befestigungsbügels 24 sind deckungsgleich im wesentlichen aufrecht verlaufende Langlochausnehmungen 28 ausgespart. Zwischen den Wangen 25 dieses Befestigungsbügels 24 liegt der Bügel 4 der Lenksäule 2, wobei der die Durchsteckhülse 8 durchsetzende Spannbolzen 10 auch durch die Langlochausnehmungen 28 ragt. An der einen Seite des Spannbolzens 10 ist ein im wesentlichen rechtwinkelig zu seiner Längsachse sich erstreckender, hier nicht näher dargestellter Betätigungshebel 29 vorgesehen.

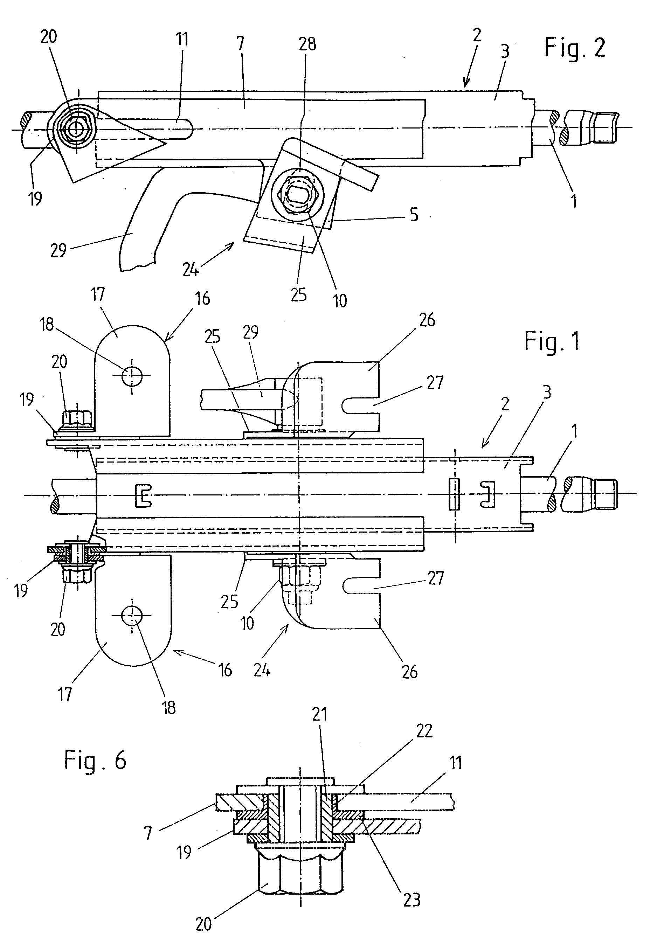

Mit hier nicht dargestellten Befestigungsschrauben, die in die Durchstecköffnungen 18 der Schenkel 17 der Winkellaschen 16 ragen bzw. in die Aufnahmeöffnungen 27 der Flansche 26 des Befefstigungsbügels 24, wird die Lenksäule mit dem Fahrzeugaufbau verbunden. Durch Verschwenken des Betätigungshebels 29 kann der Spannbolzen 10 gelöst bzw. angezogen werden, so daß die Lenksäule um die Achse der Befestigungsschrauben 20 verschwenkbar ist. Wird bei einem Unfall der Lenker gegen das Lenkrad geschleudert, so daß auf die Lenksäule eine von rechts nach links (Fig. 1 und Fig. 2) gerichtete, schlagartige Kraft einwirkt, so werden dadurch die Flansche 26 von den die Schlitze 27 durchsetzenden, im Fahrzeugaufbau verankerten Befestigungsschrauben gezogen und die aus verformbarem Material bestehende Buchse 22 wird, sobald diese Kraft ein vorgegebenes Maß erreicht hat, zum Teil abgeschert, so daß diese Schraubverbindung sich in das Langloch 11 hinein bewegen kann. Diese Relativbewegung zwischen der Verschraubung und der Langlochausnehmung 11 ist in Fig. 5 durch einen Pfeil 30 angedeutet. Der Weg und/oder zeitabhängige Verlauf der dafür erforderlichen Kraft hängt nun von der Gestaltung des stufenartigen Absatzes 15 ab bzw. dem Winkel, unter welchem die gerade verlaufenden Begrenzungskanten 14 gegen das eine Ende der Langlochausnehmung 11 konvergieren bzw. von der Art der verwendeten Materialien und der Abstimmung der Durchmesser der einzelnen Buchsen gegeneinander.

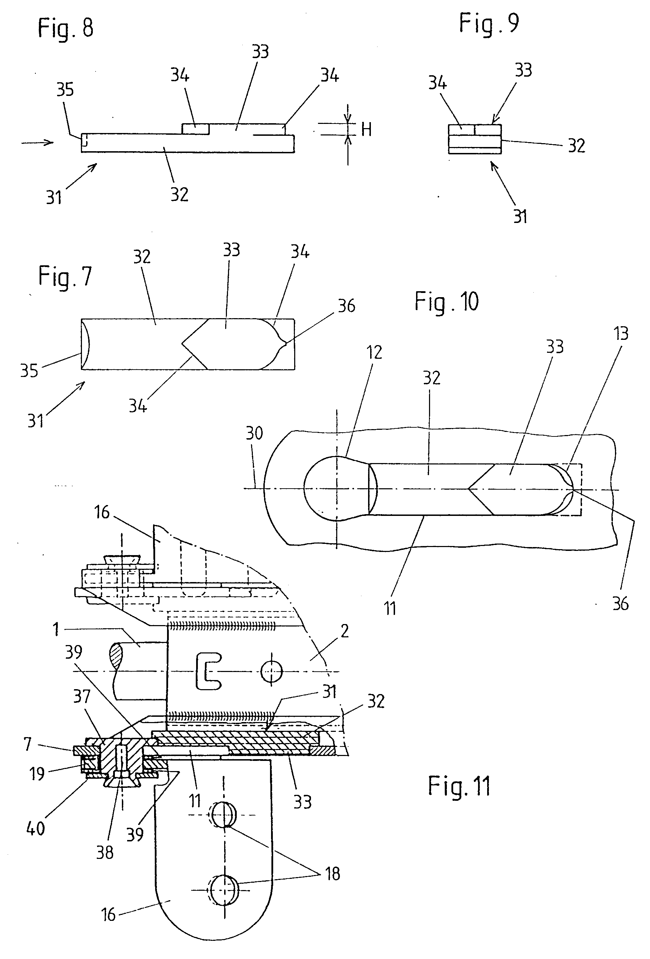

Eine zweckmäßige Ausgestaltung der Erfindung liegt nun darin, in den Langlochausnehmungen 11 ein Deformationselement 31 anzuordnen, wie es in den Figuren 7 bis 9 dargestellt ist, wobei in diesem Falle der Absatz 15 zwischen der endseitigen Begrenzungskante 12 und den geraden Begrenzungskanten 14 des Langloches 11 relativ klein ausgebildet wird, so daß im Crashfall der überwiegende Teil der Deformationsarbeit vom Deformationselement 31 aufgenommen wird. Dieses Deformationselement 31 ist einstückig aus einem geeigneten Kunststoffmaterial gefertigt und besitzt einen langgestreckten Basisteil 32 und einen Absatz 33, der am einen endseitigen Abschnitt des Basisteiles 32 angeformt ist. Die stirnseitigen Konturen 34 des Absatzes 33 laufen in Spitzen aus, wobei die eine Kontur keilförmig gestaltet ist und die andere Kontur bogenförmig mit einem vorspringenden Zapfen 36. Die Höhe h des Absatzes 33 entspricht etwa der Wandstärke des Materials, in dem das Langloch 11 ausgebildet ist. Die Achslänge des Absatzes 33 entspricht etwa der halben Länge des Langloches 11.

Die Anordnung dieses Deformationselementes 31 im Langloch 11 zeigt Figur 10 in Ansicht. Die eine Stirnseite 35 des Deformationselementes 11 liegt an den hier nicht dargestellten Befestigungsmitteln beziehungsweise der nicht dargestellten Befestigungsschraube 20 an. Der vorspringende Zapfen 36 des Absatzes 33 steht an der Begrenzungskante 13 des Langloches 11 an. Der Basisteil 32 liegt dabei zwischen Rohr 3 und Schiene 7 (Figur 4). Im Crashfall drückt das Befestigungsmittel beziehungsweise die Befestigungsschraube 20 in Richtung des Pfeiles 30 (Fig. 10) auf die Stirnseite 35 des Deformationselementes 31 und schiebt dieses nach rechts. Dies geschieht unter Deformation des Zapfens 36, worauf sich die gebogene Kontur des Absatzes 33 an der Kante 13 des Langloches 11 anlegt. Unter der Einwirkung der äußeren Kräfte wird nun der Absatz 33 vom Basisteil 32 in der Folge abgeschert, wobei dann die Befestigungsmittel, beziehungsweise die Befestigungsschraube 20 an die Spitze der keilförmigen Kontur anstößt und anschließend der Absatz 33 als Ganzes verformt und zerstört wird. Durch die Wahl der Materialien für dieses Deformationselement 31 und insbesondere auch durch die Form und Konturen der stirnseitigen Abschnitte des Absatzes 33 und ferner durch die Ausgestaltung des Übergangsbereiches, also des Absatzes 15 zwischen der Begrenzungskante 12 und den Begrenzungskanten 14 (siehe Fig. 5) des Langloches 11, kann der von Seiten der Automobilindustrie geforderte Kraftverlauf im Crashfall sehr genau erreicht werden.

Durch die Anordnung der Langlochausnehmungen 11 in vertikal stehenden Konstruktionsteilen können die von diesen aufgenommenen Befestigungsschrauben gleichzeitig als Schwenkachse für die Lenkradverstellung dienen. Der erfindungsgemäß angestrebte Vorteil wird aber auch dann erzielt, wenn diese Langlochausnehmungen 11 im wesentlichen in horizontal liegenden Konstruktionsteilen vorgesehen sind. Durch den Bund 23 an der Buchse 22 wird vermieden, daß die miteinander zu verbindenden Teile (Schiene 7 und Winkellasche 16) unmittelbar aneinander anliegen. Durch die Materialwahl für die Buchse 22 und durch die Auswahl der Abmessungen der hier unmittelbar zusammenwirkenden Teile ist der Kraftverlauf bei der Auslösung in weiten Grenzen einstellbar und über praktisch unbegrenzte Zeitspannen aufrecht zu erhalten. Nicht dargestellt in der Zeichnung sind Beilagscheiben und Schraubverbindungen, die in Verbindung mit den Befestigungen verwendet werden, mit welchen die Lenksäule am Fahrzeugaufbau fixiert wird. Auch für diese Befestigungen werden zweckmäßigerweise Distanzhülsen eingesetzt, um die Haltekraft der Schraube nicht durch das Anzugsmoment derselben zu beeinträchtigen, damit definierbare Auslösekräfte vorhanden sind.

Ein zweckmäßiges Ausführungsbeispiel für die Verbindung von Lenksäule 2 und Winkellasche 16 zeigt Fig. 11 im Längsschnitt, entsprechend der Darstellung nach Fig. 6, wobei in dieser Fig. 11 zur Bezeichnung gleicher Teile wie bei den vorbesprochenen Ausführungsformen gleiche Hinweisziffern verwendet worden sind. Anstelle einer Befestigungsschraube 20 mit einer Distanzhülse 21 und einer Buchse 22 ist hier ein Niet 37 vorgesehen mit einer axial verlaufenden Bohrung 38. Zu beiden Seiten des Schenkels 19 der Winkellasche 16 liegen vom Niet 37 durchsetzte Kunststoffscheiben 39. Eine äußere metallische Beilagscheibe 40 dient als Widerlager. Der Außendurchmesser des Schaftes des Niets 37 ist etwas kleiner als der Durchmesser des von der Begrenzungskante 12 des Langloches 11 begrenzten Öffnung, so daß das Niet 37 bei der Montage ohne besonderen Aufwand eingesetzt werden kann. Der hier nicht dargestellte Nietstempel besitzt einen auskragenden und vorspringenden Dorn, der beim Vernieten in die Bohrung 38 eindringt und dabei den zylindrischen Schaft des Nietes 37 aufweitet, so daß das für die Montage vorgesehene Spiel sozusagen eliminiert wird, der Schaft des Nietes 37 also an der Wandung der ihn aufnehmenden Öffnung satt anliegt, so daß die erwähnten Baukomponenten spielfrei miteinander verbunden sind.

Abschließend sei noch erwähnt, daß zwischen dem Befestigungsbügel 24 und den Winkellaschen 16 eine mit diesen Teilen verbundene Blattfeder vorgesehen sein kann, die hier nicht dargestellt ist und die die Aufgabe hat, nach Lösen des Betätigungshebels 29 die gegeneinander verstellbaren Teile vorerst in ihrer Lage zu halten und dadurch das Niederschwenken der Lenksäule zusammen mit dem Lenkrad zu verhindern.

## Patentansprüche

1. Sicherheitslenkung für Kraftfahrzeuge, insbesondere für Personenkraftfahrzeuge, bestehend aus einer die Lenkwelle (1) mit dem Lenkrad tragenden, am Fahrzeugaufbau mittels bolzenartigen Befestigungselementen (20, 37) festgelegten Lenksäule (2), wobei mindestens eine Aufnahmeöffnung für ein bolzenartiges Befestigungselement (20, 37) als sich in Achsrichtung der Lenksäule (2) erstreckende Langlochausnehmung (11) ausgebildet ist, wobei zwischen den endseitigen Begrenzungskarten (12, 13) der Langlochausnehmung (11) im wesentlichen gerade verlaufende Begrenzungskanten (14) vorgesehen sind und der Durchmesser zumindest einer endseitigen, kreisbogenförmigen Begrenzungskante (12) größer ist als der Abstand der im wesentlichen gerade verlaufenden Begrenzungskanten (14) und das von diesem endseitigen Bereich der Langlochausnehmung (11) aufgenommene bolzenartige Befestigungselement (20, 37) einen Außendurchmesser aufweist, der dem Durchmesser (D) der größeren endseitigen, kreisbogenförmig verlaufenden Begrenzungskante (12) der Langlochausnehmung (11) entspricht, dadurch gekennzeichnet,
daß das Befestigungselement eine Schraube (20) aufweist, die von einer Distanzhülse (21) aufgenommen ist, welche in einer Buchse (22) aus leicht verformbarem Material steckt, deren Innendurchmesser dem Außendurchmesser der Distanzhülse (21) und deren Außendurchmesser dem Durchmesser (D) der größeren, endseitigen, kreisbogenförmigen Begrenzungskante (12) der Langlochausnehmung (11) entspricht
oder daß das Befestigungselement als Niet (37) ausgebildet ist mit einer Mittelbohrung (38), über welche der Schaft des Nietes (37) bei der Vernietung aufweitbar ist und daß von der Langlochausnehmung (11) ein Deformationselement (31) auf genommen ist, das aus einem langgestreckten Basisteil (32) besteht und einem damit einstückig ausgebildeten Absatz (33), der an einem endseitigen Abschnitt des Basisteiles (32) vorgesehen ist.

2. Sicherheitslenkung nach Anspruch 1, dadurch gekennzeichnet, daß die stirnseitigen Konturen (34) des Absatzes (33) des Deformationselementes (31) gebogen und/oder keilartig verlaufen.

3. Sicherheitslenkung nach Anspruch 1, dadurch gekennzeichnet, daß die Höhe (H) des Absatzes (33) etwa der Wandstärke des Materials entspricht, in dem das Langloch (11) ausgespart ist.

4. Sicherheitslenkung nach einem der Ansprüche 1 bis 3, dadurch gekennzeichnet, daß der Absatz (33) des Deformationselementes (31) mit seiner einen Stirnkante an der einen endseitigen Begrenzungskontur (13) des Langloches (11) anliegt und die Länge des Absatzes (33) nur etwa halb so lang ist wie die Länge des Langloches (11).

5. Sicherheitslenkung nach Anspruch 4, dadurch gekennzeichnet, daß das Deformationselement (31) mit seiner seinem Absatz (33) abgewandten Stirnseite (35) an dem Niet (37) anliegt, wobei der Basisteil (32) dieses Deformationselementes (31) seitlich der Ebene des Langloches (11) liegt.

6. Sicherheitslenkung nach Anspruch 1, dadurch gekennzeichnet, daß das Deformationselement (31) bzw. die Buchse (22) aus Kunststoff gefertigt sind.

7. Sicherheitslenkung nach Anspruch 1, dadurch gekennzeichnet, daß die aus leicht verformbarem Material gefertigte Buchse (22) einen seitlich auskragenden Bund (23) aufweist, der zwischen dem die Langlochausnehmung (11) aufweisenden Teil (7) der Lenksäule (2) und dem Fahrzeugaufbau bzw. einem damit verbundenen Verbindungsglied liegt.

8. Sicherheitslenkung nach Anspruch 1, dadurch gekennzeichnet, daß die kreisbogenförmige Begrenzungskante (12) mit dem vergrößerten Durchmesser (D) über einen stufenartigen Absatz (15) in die geraden Begrenzungskanten (14) übergeht.

9. Sicherheitslenkung nach Anspruch 1, dadurch gekennzeichnet, daß die geraden Begrenzungskanten (14) gegen das lenkradseitige Ende der Langlochausnehmung (11) konvergierend verlaufen.

10. Sicherheitslenkung nach Anspruch 1, dadurch gekennzeichnet, daß die Ebenen der Langlochausnehmung (11) vertikal stehend angeordnet sind.

11. Sicherheitslenkung nach Anspruch 1, dadurch gekennzeichnet, daß das von der Langlochausnehmung (11) aufgenommene bolzenartige Befestigungsmittel (20, 37) den einen Schenkel (19) einer Winkellasche (16) durchsetzt, deren anderer Schenkel (17) am Fahrzeugaufbau befestigt ist.

12. Sicherheitslenkung nach Anspruch 1, dadurch gekennzeichnet, daß Aufnahmeöffnungen (27) für bolzenartige Befestigungselemente in Flanschen (26) vorgesehen sind, die von den Wangen (25) eines U-förmigen Befestigungsbügels (24) seitlich auskragen und zwischen den Wangen (25) dieses Befestigungsbügels (24) die Lenksäule (2) liegt.

13. Sicherheitslenkung nach Anspruch 12, dadurch gekennzeichnet, daß in den Wangen (25) des U-förmigen Befestigungsbügels (24) deckungsgleich liegende, aufrecht verlaufende Langlochausnehmungen (28) vorgesehen sind, durch welche ein in bzw. an der Lenksäule (2) vorgesehener Spannbolzen (10) ragt.

14. Sicherheitslenkung nach Anspruch 13, dadurch gekennzeichnet, daß der Spannbolzen (10) an seinem einen Ende mit einem vorzugsweise rechtwinkelig zu seiner Achse angeordneten Betätigungshebel (29) verbunden ist.

## Claims

1. A safety steering system for motor vehicles, in particular for passenger cars, comprising a steering column (2) supporting the steering shaft (1) with the steering wheel and secured to the vehicle body by means of pin-like fastening elements (20, 37), wherein at least one receiving opening for a pin-like fastening element (20, 37) is constructed in the form of an elongate recess (11) extending in the axial direction of the steering column (2), wherein boundary edges (14) extending substantially straight are provided between the boundary edges (12, 13) at the end of the elongate recess (11), and the diameter of at least one circular boundary edge (12) at the end is greater than the distance between the boundary edges (14) extending substantially straight, and the pin-like fastening element (20, 37) received by the said end area of the elongate recess (11) has an external diameter which corresponds to the diameter (**D**) of the larger circular boundary edge (12) at the end of the elongate recess (11), **characterized in that**
the fastening element comprises a bolt (20) which is received by a spacer sleeve (21) inserted into a bush (22) of easily deformable material, the internal diameter of which corresponds to the external diameter of the spacer sleeve (21) and the external diameter of which corresponds to the diameter (**D**) of the larger circular boundary edge (12) at the end of the elongate recess (11),
or the fastening element is constructed in the form of a rivet (37) with a central bore (38), by way of which the shank of the rivet (37) can be widened during the riveting, and the elongate recess (11) receives a deformation element (31) which comprises an elongate base part (32) and an offset (33) which is formed integrally therewith and which is provided on an end portion of the base part (32).

2. A safety steering system according to Claim 1, **characterized in that** the end-face contours (34) of the offset (33) of the deformation element (31) extend in a curve and/or in a wedge-shape.

3. A safety steering system according to Claim 1, **characterized in that** the height (**H**) of the offset (33) corresponds approximately to the wall thickness of the material in which the elongate hole (11) is formed.

4. A safety steering system according to one of Claims 1 to 3, **characterized in tha**t the offset (33) of the deformation element (31) rests with one end face thereof on one boundary contour (13) at the end of the elongate hole (11), and the length of the offset (33) is only approximately half as long as the length of the elongate hole (11).

5. A safety steering system according to Claim 4, **characterized in that** the deformation element (31) rests with its end face (35) remote from its offset (33) on the rivet (37), wherein the base part (32) of the said deformation element (31) is situated to the side of the plane of the elongate hole (11).

6. A safety steering system according to Claim 1, **characterized in that** the deformation element (31) and the bush (22) are produced from plastics material.

7. A safety steering system according to Claim 1, **characterized in that** the bush (22) produced from easily deformable material has a laterally projecting collar (23) which is interposed between the part (7) of the steering column (2) provided with the elongate recess (11) and the vehicle body or a connexion member connected thereto.

8. A safety steering system according to Claim 1, **characterized in that** the circular boundary edge (12) with the enlarged diameter (**D**) passes into the straight boundary edges (14) by way of a step-like offset (15).

9. A safety steering system according to Claim 1, **characterized in that** the straight boundary edges (14) extend in a converging manner towards the steering-wheel end of the elongate recess (11).

10. A safety steering system according to Claim 1, **characterized in that** the planes of the elongate recess (11) are arranged vertically upright.

11. A safety steering system according to Claim 1, **characterized in that** the pin-like fastening means (20, 37) received by the elongate recess (11) is traversed by an arm (19) of an angle plate (16), the other arm (17) of which is secured to the vehicle body.

12. A safety steering system according to Claim 1, **characterized in that** receiving openings (27) for pin-like fastening elements are provided in flanges (26) which project laterally from the side walls (25) of a U-shaped fastening strap (24), and the steering column (2) is situated between the side walls (25) of the said fastening strap (24).

13. A safety steering system according to Claim 12, **characterized in that** vertically extending elongate recesses (28), through which a tensioning bolt (10) provided in or on the steering column (2) projects, are provided in alignment in the side walls (25) of the U-shaped fastening strap (24).

14. A safety steering system according to Claim 13, **characterized in that** the tensioning bolt (10) is connected at one end thereof to an actuating lever (29) arranged preferably at right angles to its axis.

## Revendications

1. Direction de sécurité pour véhicule automobile, notamment véhicule de tourisme comprenant un axe de direction (1) portant le volant, une colonne de direction (2) fixée à la carrosserie du véhicule à l'aide d'éléments de fixation (20, 37) en forme de boulons, au moins un orifice de réception étant réalisé pour un élément de fixation, en forme de boulon (20, 37) sous la forme d'un trou oblong (11) longitudinal s'étendant dans la direction de l'axe de la colonne de direction (2), et entre les arêtes limites (12, 13) du trou oblong (11), il y a des arêtes limites (14) essentiellement rectilignes, et le diamètre d'au moins une arête limite (12) en arc de cercle à une extrémité, est supérieure à la distance des arêtes (14) essentiellement droites, et l'élément de fixation (20, 37) en forme de boulon reçu par cette zone d'extrémité du trou oblong (11) a un diamètre extérieur qui correspond au diamètre (D) de l'arête limite (12) en arc de cercle, à l'extrémité, la plus grande du trou oblong (11),
caractérisée en ce que
l'élément de fixation comprend une vis (20) logée dans un manchon d'écartement (21) engagé dans une douille (22) réalisée en une matière facilement déformable, dont le diamètre intérieur correspond au diamètre extérieur du manchon d'écartement (21) et dont le diamètre extérieur correspond au diamètre (D) de la plus grande arête circulaire (12), d'extrémité du trou oblong (11),
ou l'élément de fixation est en forme de rivet (37) avec un perçage central (38) permettant d'augmenter les dimensions du corps du rivet (37) lors du rivetage et le trou oblong (11) reçoit un élément déformable (31) composé d'une pièce de base (32), allongée et d'un épaulement (33) faisant corps avec cette pièce de base, et qui et prévu au niveau d'un segment d'extrémité de la pièce de base (32).

2. Direction de sécurité selon la revendication 1,
caractérisée en ce que
les contours frontaux (34) de l'épaulement (33) de l'élément déformable (31) sont de forme courbe et/ou en pointe.

3. Direction de sécurité selon la revendication 1,
caractérisée en ce que
la hauteur (H) de l'épaulement (33) correspond sensiblement à l'épaisseur de la matière dans laquelle est réalisé le trou oblong (11).

4. Direction de sécurité selon l'une des revendications 1 à 3,
caractérisée en ce que
l'épaulement (33) de l'élément déformable (31) s'applique par l'une de ses arêtes frontales contre un contour limite (13) à une extrémité du trou oblong (11) et la longueur de l'épaulement (33) correspond sensiblement seulement à la moitié de la longueur du trou oblong (11).

5. Direction de sécurité selon la revendication 4,
caractérisée en ce que
l'élément déformable (31) s'appuie par sa face frontale (35) opposée à l'épaulement (33) contre le rivet (37), la pièce de base (32) de cet élément déformable (31) se situant à côté du plan du trou oblong (11).

6. Direction de sécurité selon la revendication 1,
caractérisée en ce que
l'élément déformable (31) ou le manchon (22) sont fabriqués en matière plastique.

7. Direction de sécurité selon la revendication 1,
caractérisée en ce que
le manchon (22) en matière facilement déformable comporte une collerette (23) latéralement en saillie, située entre la partie (7) de la colonne de direction (2) comportant le trou oblong (11) et la carrosserie du véhicule ou un élément de liaison relié à celle-ci.

8. Direction de sécurité selon la revendication 1,
caractérisée en ce que
l'arête en forme d'arc de cercle (12) de plus grand diamètre (D) rejoint les arêtes droites (14) par l'intermédiaire d'un épaulement étagé (15).

9. Direction de sécurité selon la revendication 1,
caractérisée en ce que
les arêtes droites (14) convergent vers l'extrémité du trou oblong (11) située du côté du volant.

10. Direction de sécurité selon la revendication 1,
caractérisée en ce que
les plans du trou oblong (11) sont debout verticalement.

11. Direction de sécurité selon la revendication 1,
caractérisée en ce que
le moyen de fixation (20, 37) en forme de boulon logé dans le trou oblong (11) traverse une branche (19) d'une patte coudée (16) dont l'autre branche est fixée à la carrosserie du véhicule.

12. Direction de sécurité selon la revendication 1,
caractérisée en ce que
les ouvertures de réception (27) pour les éléments de fixation en forme de boulon sont prévues dans les brides (26) celles-ci dépassant latéralement des joues (25) d'un étrier de fixation (24) en forme de U et la colonne de direction (2) se situant entre les joues (25) de cet étrier de fixation (24).

13. Direction de sécurité selon la revendication 12,
caractérisée en ce que
les joues (25) de l'étrier de fixation (24) en forme de U comportent en correspondance des trous oblongs (28), verticaux, traversés par une vis de serrage (10) prévue dans ou sur la colonne de direction (2).

14. Direction de sécurité selon la revendication 13,
caractérisée en ce que
le goujon de serrage (10) est relié par une extrémité à un levier de manoeuvre (29) de préférence perpendiculaire à cet axe.
